## Europäisches Patentamt
## European Patent Office
## Office européen des brevets

(19)

(11) Publication number: **0 057 603**
**A2**

# (12) EUROPEAN PATENT APPLICATION

(21) Application number: **82300494.0**

(22) Date of filing: **29.01.82**

(51) Int. Cl.³: **G 07 F 7/10**

(30) Priority: **30.01.81 GB 8102801**

(43) Date of publication of application: **11.08.82**
**Bulletin 82/32**

(84) Designated Contracting States: **AT BE CH DE FR GB IT LI LU NL SE**

(71) Applicant: **Ward, William, 14 Belsize Park Gardens, London, NW3 4LO (GB)**
Applicant: **Chalmers, David Arthur, 75 Gordon Road, London N3 1ER (GB)**
Applicant: **Halpern, John Wolfgang, 14 Belsize Park Gardens, London, NW3 4LO, (GB)**

(72) Inventor: **Halpern, John Wolfgang, 14 Belsize Park Gardens, London NW3 (GB)**

(74) Representative: **Andrews, Robert Leonard et al, HASELTINE LAKE & Co. Hazlitt House, 28 Southampton Buildings Chancery Lane, London WC2A 1AT (GB)**

(54) Hierarchic arrangement for the verification and renewal of security data in electronic fund transfer systems.

(57) A pay or credit card (A) is inductively coupled to a data transfer programming and processing and display unit (B) which in turn is coupled via inductive coupling links (2b–2c, 3b–3c) to a third unit (C) which comprises mostly miniaturized circuitry such as more particularly storage registers (31) for two «wrong» security check numbers and four «right» such numbers and auxiliary logic circuitry, as also a transaction list memory (63). The latter may be constituted as a fully sealed tape unit with built-in stepping motor and solid-state comparator circuitry. The said security check numbers are received and from time to time updated via inductive coupling links (2d–2e, 3d–3e) from a main transaction office (D) such as a bank, credit card office, etc. and, during a card transaction, responsive to a reference number emitted by the card, selects one or more of the «right» numbers and a «wrong» number. The automatic sequence changer circuit (32) presents to the card an unpredictable sequence of the selected numbers and then tests the card reaction to this input, in a response evaluator circuit (33). The test and transaction list unit (C) would be optional at a card terminal and required only at off-line stations (f.e. for smaller traders and vending machines where separate data lines to banks would not be economical).Where on-line operation is possible, the bank computer (D) would perform the check operations of unit C. Accordingly, the bank computer (D) would communicate during day time with cards (A) via processors (B) which belong to on-line terminals, while during night time and early morning hours the accummulated off-line transactions are received from test and transaction storage unit (C) via a modem (D'), when also the cyclically required modification of one of the registers (31) is performed. The Bank Computer (D) itself receives from time to time modification instructions for its security check number register via interbank data lines from Bank Head Office. The Head Offices of different banks receive similar data from a single random data generator or clearing bank director respectively. A card processor for unpredictable sequence of right and wrong test numbers has first been described in British patent application 79 31 208, and is here presented as a complete card data and regional transaction transfer security system.

ACTORUM AG

HIERARCHIC ARRANGEMENT FOR THE VERIFICATION AND RENEWAL
OF SECURITY DATA IN ELECTRONIC FUND TRANSFER SYSTEMS.

Our patent application BP 8028824 entitled Security Arrangements in
Data Transfer Equipment des cribes measures for ensuring that data con-
tained in a data storage station cannot be read out without that station
first passing a 'question and answer' test which is of such a kind that
stereotype – that is forgable – test answers cannot be given by that storage station. A safeguard against the possibility of a set of test numbers
becoming known, for example through unauthorized manipulation of the equipment, has further been described in the above cited application; it consists
in arrangements for changing the relationship between test number storage
addresses and the test numbers  as well as in procuring entirely new test
numbers, at regular or irregular intervals of time. The description speaks
of a cyclic change in the significance of the numbers wh ich to begin with
are ' active ' , then'semi-retired' , then vacated numbers. Vacated numbers
are always replaced by new  'active ' numbers. These test numbers, originating as they would  from a single centralized Head Quarters of a Bank
or of a central Clearing Bank and transmitted from there via scrambled
dedicated data lines to the branches of banks,credit institutes, etc.,mainly
during night times, would be very safe from unauthorized inspection or interference especially if the security measures described hereunder are applied.

Already in our patent application ser mo. 8028824 a method of changing test
numbers without loosing region- or nationwide validity at transaction stations was described. The description was fairly complete as far as the
data transfer between a portable data token and a transaction station is
concerned; however, it failed to show the exact security measures that
would ensure that only an authorized station would be able to change the
test codes,  and that the transfer of transaction data to another data
station is dependent on the fulfillment of certain test conditions.
An investigation of the overall requirement shows that the concept of a
self-repairing security system that was applied in pat. appl. 8028824
for the data transfer between a widely distributed 'pay token'  and
point of sale or transaction terminals  would also have to be applied
to the data communication between a transaction terminal and a bank or
credit card branch, and again to the communication of test numbers from
the said Clearing Center or Bank H Q from and to the branches. Thereby
one arrives at a hierarchical arrangement for the passing on of peric-
dically changing test data,in the context of an unpredicatble sequence
of right and wrong test numbers.

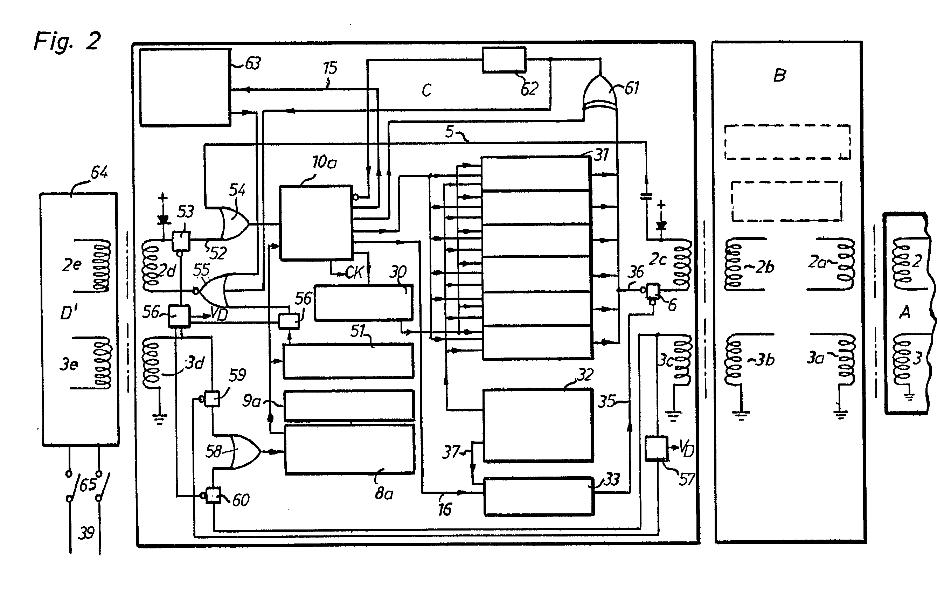

In order to take account of the requirements of an overall secure system it became necessary to develop the circuitry of Figure 2 of the cited patent application in greater detail resulting in a re-arrangement of circuit units as follows:

The portable data token, 'A'
an associable data transaction controller unit, 'B',
a with 'B' associable self-contained component 'C',
and a computer station at a bank branch, 'D' ,
wherein all the named units contain reactive coupling links.

D can also be an intermediate signal converter from which the data contents can be received/transmitted to a data center D by a pair of telephone lines. The interrogation principles applied between D and C would be analogous to thise described for the interrogation of A by B, or respectively B by A.

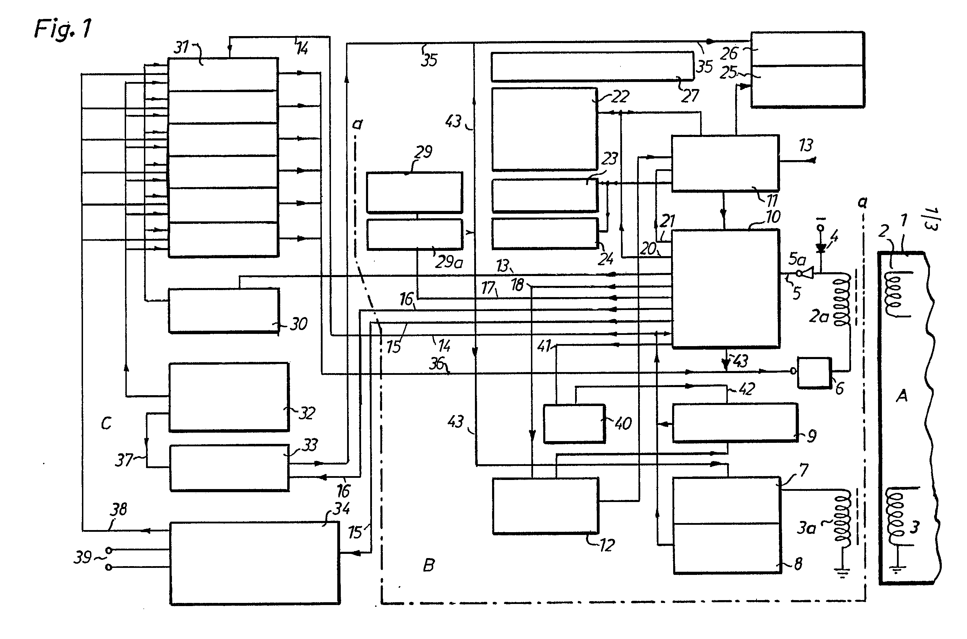

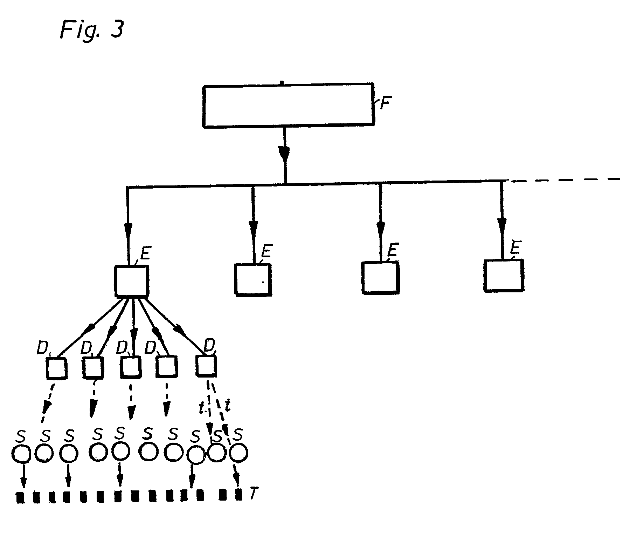

For the better understanding of the improvements presented by this present application, the circuitry of Figure 2 of the cited application is here recapitulated in a block-diagrammatic form in the present Figure 1. Figure 2 of the present application shows the methamorphosis in sufficient detail. Figure 3 gives a survey of the total systems structure with respect to the data flow therein.

## Detail Description of Figure 1

A represents the circuit of the portable data component as given in Detail in Figure 1 of the cited patent application. The inductive coupling arrangement using coils 2 and 3, and the electrical detail circuitry connected therewith is described in the applicants application nr. 7931208. Therefore, these details are not being repeated in this paper, although some elements are indicatively included in the diagrams.

The associable transaction control terminal has corresponding coupling coils 2a for the bidricetional transfer of data and 3a for passing on clock pulses and energy to component A. A clock phase counter and decoder 8 helps to differentiate between clock pulses having different roles and timing; in conjunction with a program counter 9 the data multiplex circuit 10 addresses and activates various portions of the circuit at the required times and sequences via internal ( microelectronic ) wires 19,14,15,16,17,18,20,21, 41 and 43. For example the synchronizing pulses comes over wire 41 which ensure that the program counters in A synchronize with program counter 9.

The address or reference number which originated in token A is passed to the address decode unit 30 via wire 19. The selected test number of unit 31, flanked by one or two 'wrong' test numbers, is clocked out via wire 36 and a current amplifier 6 into the transfer coils 2a- 2 and circuit A. Similarly, debit data are transferred via wire 43 to the data coil 2a. The token circuit's response to the sequence of 'right' and 'wrong' test numbers is transmitted via wire 16 to the response evaluator 33. If the response shows a faulty answer the circuit puts an inhibit signal on the Oscillator 7 via wire 43 and also produces a 'faulty' display via wire 35 on the display section 26. After the token has been tested satisfactorily the value of the token, or of the selected token account ( see co-pending application entitled 'Portable Data Carrier incorporating manually presettable processing modes' ) is being read out and shown up in store/display section 22. The debit calculator 11 responsive to a debit input 13 calculated the reduced token or account value and displays it in section 24. This display must be in agreement with the subsequent readout of the new value from the data token 11 directly which is fully described in the cited patent application 8028824. The token is of course also tested against general qualifying data such as a code for the national network within which the electronic fund transfer token has validity or personal membership etc. This comparison is carried out by circuit blocks 29 and 29a, and if this test is defect the intended transaction is rejected.

The buffer store 34 was meant to contain the new test numbers offered for example via telephone connection to the terminal. However, this was by way of indication only; it was always clear that security against arbitrary insertion of test data would have to be high, as high as that provided for all data exchanges in the system. Moreover, since the data in memory store 31 constitute variable data it is necessary to ensure that the functionally associated circuitry cannot be bye-passed and this is best achieved by integrating all the related circuits on a single substrate. This includes at the very least the automatic sequencing changer, the response evaluator, the address decoder, and all the multiplexing circuit elements. The transaction memory 63 should be fully encapsulated conjointly with the integrated circuitry. This leads to a separation of Fig. 1 into two sections, B and C, the boundary of 'B' being indicated by the line a - a. This re-arrangement reflects in the diagram Figure 2. Here, A and B are now represented by reactively coupled circuit blocks. Again reactively coupled to this system is now section C in which 31 is the block of registers for the wrong and right test numbers. ( Note, even the wrong test numbers have address-enable inputs;these,however, are only used when new test numbers are inserted into block 31 to replace 'v_cated' test numbers; on such occasions even the wrong numbers are changed at times, for good reasons.)

Most of the circuit blocks can be recognized as having been contained in Figure 1; the multiplex circuitry , the program counter, and the clock phase decoder had to be duplicated, ( 10a,9a and 8a ).

For communicating with a data center such as a bank branch D there are built into block C two further coupling links 2d and 3d which are capable of being coupled with coils 2e and 3e in unit D. (In Figure 2, D' represents a MODEM whereby C can communicate with D via a pair of ordinary telephone lines).

The OR gate 54 can accept input data either from coupling coils 2c or 2d. Similarly OR gate 58 accepts clock pulses either from coil 3d or 3c. Simultaneous inputs are inhibited by switches 59,60 and 53.

The transaction memory 63 stores essential information related to each consecutive transaction individually, such as Account Number of token owner, bank branch code, date and debit amount.  In order to read out this record from storage unit 63, certain conditions must be fulfilled. The interrogating computer unit D will check on the qualifying data held in store 51 which also delivers an address number for the first test number held in store 31. Computer D must then generate the corresponding test number and transfer it to unit C where it is compared in exclusive OR gate 61.  This is repeated for each of the four test numbers. If only one is defect, the bistable 62 latches and inhibits any further processing. This is a safeguard against the transaction memory loosing its data through an unwarranted readout. After the test and readout steps are carried out there remain further program steps in the program counter; these may be used for providing a mark to existing active numbers whereby they are transferred to the class of semi-retired numbers;  and for vacating another test number from the last-mentioned group to replace it by an entirely new test number. Finally,also for changing one or the other of the socalled 'wrong' test numbers so as to eliminate all familiarity elements from the test number structure.

As already indicated, the unit 'C' consists of one or more integrated circuit chips potted in a box which is fully sealed allround. A rechargable battery may be integral within the device.

As a rule,the unit 'C' would be removable from its location within the chassis of unit 'B', and may be bodily taken to the trader's own bank branch for the purpose of transferring the information contained in storage segment 63 to the computer of the bank branch concerned in order to debit the various accounts of the trader's customers and to credit the account of the trader concerned. That this provides the opportunity for also changing the said variable test numbers is an administrative matter which need not concern the trader.

The transaction list of memory 63 provides space to register for each transaction the account number of the token, the debit, a transaction sequential number., a serial number for the location of the terminal,and a date. The transaction number is obtained from the token A and represents the number of transaction carried out with the token up to the moment before the next transaction. As the token is checked into sales terminal B this number is incremented by 1 and returned to the token, also passed on to unit C to be added to the transaction information in store 63.

Figure 2 indicates two stores in the Sales Terminal B, the just referred to store receiving from A the current transaction number and increasing it by 1. The other store holds the permanent location number identifying the location of the terminal; also these data are passed on to the store 63 but need not necessarily be repeated here for each transaction although further downstream, when transaction data are transferred to the banks' computers, they have to be added together with the time information. All these data are needed for a certain amount of automatic auditing and validity checking in the banks' computers.

The technique of the active, semi-active and retired test numbers first described in patent application 8028824 may also be used to protect the inalterability of the account number. This would be done by providing in the token for t w o account registers one of which holds the true account number whereas the other holds a function of the account number and the test number held in the token. A simple case is where this function is a difference. Call AN the account number, TN the test number.The said second account store must then hold a number $an = AN - TN$ irrespective of sign. When the token is checked into a point of sale terminal or into an updating terminal both account numbers are read out and their difference formed in an arithmetic circuit the terminal must be equal to TN. If it is not equal the comparator produces an output signal disabling all further operation and providing a visual indication such as 'defect account number' or ' token retained for check-up'.

Since, as has been described in the referenced documents, the test numbers change at irregular intervals, also the deduced AN numbers will necessarily change as well in the course of time. A potential forger of the account number will find himself rejected, assuming he may altogether succeed in incorporating a suitably multiplexed but nevertheless directly accessable micro-store for holding account numbers which he may at will vary. Because, according to the above defined scheme, it would not be enough for the would-be forger to generate an account number different from his own, he must also enter a new AN number which is related to the test number held in the token. This test number, however, is so locked into the circuitry that it has no outlet for being read from the circuit.Not knowing what this number is, the would-be forger could thus not effectively alter the account number of the token. The only other approach for him would be to try to monitor, if that were at all possible - and this depends partly on the detail techniques employed in the data transfer  - the transfer means at some point. This would require elaborate apparatus difficult to place at a publicly accessable terminal. At other points these data would be completely inaccessable. Nor could any person be asked what the test numbers are at a given time since, they are electronically random-selected at the Head Quarter computer of the Clearing House. They are transmitted in scrambled form to Banks and Branches all over the country at unpredictable dates and times and occupy the system lines for only an infinitesimal portion of their operating times. The token terminals at Banks would not permit meddling with them and would cut even thin wire probes. Open rapid access terminals would incorporate precautions against information tapping and the opportunities for doing unusual things unobserved would be rare. Whereas one can never exclude one occasion when all the circumstances happen to further an unobserved fraudulent attempt at discovering the test number , the likelihood that this can be repeated, say week by week, is non-existent. The risk for being observed and apprehended would be the greater as bank computers would trace the very first irregularity and also establish the terminal at
which it occured. This would make it too unsafe to repeat illegal
interference,even if it is possible; yet, the system of variable
test numbers would make it necessary/ to monitor them continually.

In summary, with the aid of the variable test numbers technique
a forge attempt directed at the account number of the pay token,
can   i n s t a n t l y   be refuted and the intended sale is stopped.

Figure 3 shows how new test numbers which originate at a National
Bank Headquarters or a Clearing House Center   'F'   are communicated
to regional Headquarters  'E', and from there to branches 'D' of the
various banks  via dedicated scrambled data lines. The local bank
branches, post offices (giro) and credit card agencies pass on any
new test numbers to the cumulative transaction box 'C' when checked
in  physically at their respective terminals or, via phone lines t.
When the box 'C' - as would normally be the case - forms part of the
point of sale terminal S  it passes on to the individual tokens T
when presented to S  the new test numbers concerned. While, in theory,
it might be possible to tap the new test signal while it is being
transmitted to a data token it is well within the scope of the art
to place great obstacles into the path of a person wishing to do that
at a public terminal with fraudulent intent.

Summary. A novel cashless value transfer system is described which
permits the use of permanent electronic tokens while maintaining a
high standard of security and versatility. The procurement cost of
the equipment would be distributed over several agencies. The tokens,
being permanent, would be issued to the public against registration
and an annual membership fee from which the cost of supply and administration can readily be covered.  The box C would be purchased
by the individual trading firms. Banks would purchase terminals and hire
them out to traders.  Dedicated data lines for the transmission of
inter-bank data already exist, or would shortly exist; they would
be only lightly loaded by the proposed system.

C  L  A  I  M  S
-o-o-o-o-o-o-o-o-o-o-

1. An electronic fund transfer and data protection system comprising
 (A) portable data carriers (A)
 (B) transaction terminals (B)
 (C) a self-contained portable storage unit (C) for storing security test numbers and a list of transaction events data obtained from said transaction terminal
 (D) a computer unit with data storage (D) space for receiving transaction event data from units 'C' and for imparting new test numbers to said units 'C'
 (F) one originating station (F) where security test numbers are defined and electrically passed on to compter units 'D' via dedicated communication lines

2. An electronic fund transfer and data protection system wherein units (A,B,C and D) have each reactive coupling links.

3. An electronic fund transfer and data protection system as in Claim 1 charactetrized in that unit 'C' incorporates a store for several test numbers, and that one of these is selected by means of a reference address which is transmitted by unit 'A' when associated with unit 'B' via B to unit 'C' whereupon the selected test number together with "wrong" test data is transmitted back to unit A via unit B.

4. An electronic fund and data protection system as in Claims 1 and 3 in which unit 'A' receives the combination of right and wrong test signals and transmits to unit 'C' via unit 'B' its evaluation signals of said test signals whereupon unit 'C' examines said evaluation by its own evaluation circuit to produce an output voltage which inhibits further processing if the evaluation by unit 'A' proves to be defect.

5. An electronic fund and data transfer and protection system as in Claim 1 characterized in that the unit 'C' has two separate input/output reactive coupling links and that portions of its circuitry can be accessed via either of these links, that is to say , either by transaction terminal 'B', or by Computer Terminal 'D' via auxiliary Modem 'D' , but not by both units simultaneously.

6. An electronic fund transfer and data protection system as in Claim 5
   wherein inhibit gates are provided to prevent simultaneous coupling
   of unit 'C' to circuits of units 'B' and 'D' '.

7. An electronic fund transfer and data protection system as in Claim 1
   wherein unit 'C' has a storage register for storing test number address
   data, and means for transmitting these data to a computer installation 'D', storage means in the computer D to store test numbers
   and addressing means to select one of these numbers for readout by
   an interrogating station, means in the unit 'C' for receiving and
   comparing such a selected test number with that stored in its said
   storage register, and means to stop the communication link with the
   computer/if said comparison is defect.

8. An electronic fund transfer and data protection system as in Claim 7
   wherein the data transfer program in unit 'C' permits the readout and
   subsequent testing of all the test numbers held in its memory against
   corresponding test numbers held by the computer unit and produced in
   response to consecutively transmitted addresses sent out by unit 'C',
   and means in the unit 'C' circuitry to stop the communication link
   with the computer if any one of the comparison tests fails.

9. An electronic fund transfer and data protection system as in Claim  1
   chacaretrized by means in the computer D for receiving instructions
   via dedicated data communication networks for earmarking currently
   'active' test numbers as  'semi-retired' test numbers, and of earmarking currently 'semi-retired' test numbers as replaceable by new
   test numbers,  furthermore means in the computer D for receiving and
   storing new test numbers, means for encoding a semi-retired number
   and for transmitting said code or flag to unit 'C' within the time-
   multiplex plan of its program cycle, and means for displacing a retired number in unit 'C' storage space and for replacing it by said
   new test number.

10. An electronic fund transfer and data protection system as in Claim 9
    the computer unit D being adapted to receive from unit 'C' consecutive transaction lists read out from a transaction list store in unit
    'C', and inhibit means in the circuit of unit 'C' preventing said
    readout if the computer response to the test number addresses sent out
    by unit 'C' proved to have been defect.

0057603

11. An electronic fund transfer and data protection system as in Claim
    10, in which said transaction list store contained in unit 'C' consists of a tape deck with stepping motor and that said motor is powered
    by inductive coupling to data controlled stepping pulses, and which
    stepping pulses pass through an inhibit gate controlled by a logic
    signal in the circuit of unit 'C'.

12. An electronic fund transfer and data protection system as in claims
    1 to 11, wherein the major part of the circuits of unit 'C' constitute large-scale integrated circuits incorporated in an externally
    smooth and contactless, readily transportable tablet.

13. An electronic fund transfer and data protection system as in claims
    1 - 12  w h e r e i n  the portable data carrier 'A' contains a
    store for holding a sequential number which is transferred to the
    circuit of the transaction terminal 'B' where it is incremented by
    a number x and returned to the data token at a pretermined time slot
    of the transaction cycle.

14. An electronic data transfer system as in claim 13,  wherein
    provisions are made in the self-contained portable storage unit 'C'
    for storing the said transaction number as an adjunct to the parti-
    culars of each transaction within the transaction list memory
    in order to pass it on to the bank computers.

15. An electronic data transfer and data protection system as in claims
    13 and 14, wherein the bank computers are programmed to compare
    the transaction numbers of conseucitve transactions of the same
    account number and to reject any particular transaction  if the discrepancy exceeds a preset amount and to initiate a printout of the
    transaction details for further action by staff as required.

16. An electronic data transfer and fund protection system wherein the
    terminal 'B', or the portable storage unit 'C' contains a location
    code by which its installed location is recognizable , and means in
    the banks' computers to attach this code to the transaction details
    for each individual fund transfer.

0057603

17. An electronic fund transfer and data protection system in accordance
    with the principles of variable test numbers described in British
    Patent Application 8028824 in w h i c h the portable data
    carrier contains two further registers to hold in on register
    a true account number and in the other register a derived account
    number, the latter being a function of said true account number
    and the active test number held in the test number register of the
    said data carrier, and means for reading out from said data carrier
    both the true and the derived account numbers and the address code
    for addressing the corresponding test number register in the
    transaction terminal.

18. An electronic fund transfer and data protection system in accordance with Claim 1 - 16, and 17 , the improvement consisting of
    the provision of processing means in the transaction terminal 'B'
    or the self-contained unit 'C', which, after receiving the two
    account numbers and the address code from the portable data carrier,
    generate a function of the interaction of the true account
    number and the duly addressed testnumber , comparator means to
    compare the number resulting from said interaction with the
    derived account number received from the portable data carrier,
    and if identity is not establish/by said comparator, the transaction is disabled and displayed as rejected.

19.  An electronic Fund Transfer and Data Protection
System as in claims 3 to 10 wherein the functions of the
transfer storage and security test unit (C) are programmed
into the remote computer unit (D) if the card (A) is to
work in an on-line mode in which case unit (C) is bypassed or replaced by a dummy insert connecting transfer
windings (2c,3c) with transfer windings/modem  coupling
(2d, 3d) for direct data conversation via a Modem (64).

1/3

Fig. 1

Fig. 2

Fig. 3